# EUROPÄISCHE PATENTSCHRIFT

(11) **EP 0 952 069 B1**
(45) Veröffentlichungstag und Bekanntmachung des Hinweises auf die Patenterteilung: **23.10.2002**
(21) Anmeldenummer: 99107702.5
(22) Anmeldetag: 17.04.1999
(51) Int. Cl.: B62D 25/20, B62D 21/20

(54) **Transportanhänger**
Transport trailer
Remorque de transport

(30) Priorität: 23.04.1998 DE 29807370 U
(43) Veröffentlichungstag der Anmeldung: 27.10.1999
(73) Patentinhaber: HUMBAUR GmbH, 86368 Gersthofen (DE)
(72) Erfinder: Humbaur, Anton, 86368 Gersthofen (DE)
(74) Vertreter: Rapp, Bertram, Dr.

(56) Entgegenhaltungen:
- US-A- 3 612 569
- PATENT ABSTRACTS OF JAPAN vol. 005, no. 083 (M-071), 30. Mai 1981 (1981-05-30) & JP 56 031874 A (SHIN MEIWA IND CO LTD), 31. März 1981 (1981-03-31)

## Beschreibung

Die Erfindung betrifft einen Transportanhänger nach dem Oberbegriff des Anspruches 1.

Ein bekannter Transportanhänger dieser Art weist einen Außenrahmen auf, der aus vier Rahmenteilen besteht, die über Knotenbleche miteinander verbunden sind. Die im wesentlichen U-förmigen Rahmenteile weisen innenseitig eine vertikale Abwinkelung auf, an welche sich eine horizontale Abwinkelung anschließt. Die horizontalen Abwinkelungen der Rahmenteile tragen einen Holzboden, dessen Dicke etwa der vorgenannten vertikalen Abwinkelung entspricht. An den Enden sind die Rahmenteile auf Gehrung geschnitten. Ein solcher Aufbau ist teuer in der Herstellung. Besteht der Wunsch, daß die Bodenoberfläche aus Blech bestehen soll, dann ist es erforderlich, den Holzboden mit Blech zu beplanken. Dies verteuert nicht nur zusätzlich den Anhänger, sondern führt auch zu dem Nachteil, daß durch Wasser, welches zwischen der Beplankung und dem Holzboden eindringen kann, zu einer Verrottung des Holzbodens führt.

Ein Transportanhänger der eingangs genannten Art ist Gegenstand der US-A-3,612,569. Dieser weist zwei Längsträger auf, die im Querschnitt doppel-T-förmig ausgebildet sind. Rechtwinklig zu diesen Längsträgern verlaufen Querträger. Auf den Längs- und Querträgern liegt ein Blechboden auf, dessen längsverlaufende Ränder L-förmig abgekantet sind, so daß sich am Rand ein U-förmiger Querschnitt ergibt. An den äußeren Enden der Querträger sind L-förmige Winkeleisen vorgesehen, deren einer Schenkel mit einem Querträger und deren anderer Schenkel mit der Abkantung des Blechbodens vernietet sind. Hierbei ist als Nachteil zu sehen, daß die Ränder des Blechbodens exakt abgekantet werden müssen, insbesondere muß der Abstand zwischen den längsverlaufenden Abkantungen exakt stimmen, was die Herstellung des Transportanhängers verteuert.

Es besteht die Aufgabe, einen Transportanhänger zu schaffen, der preisgünstiger in der Herstellung ist.

Gelöst wird diese Aufgabe mit den Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:

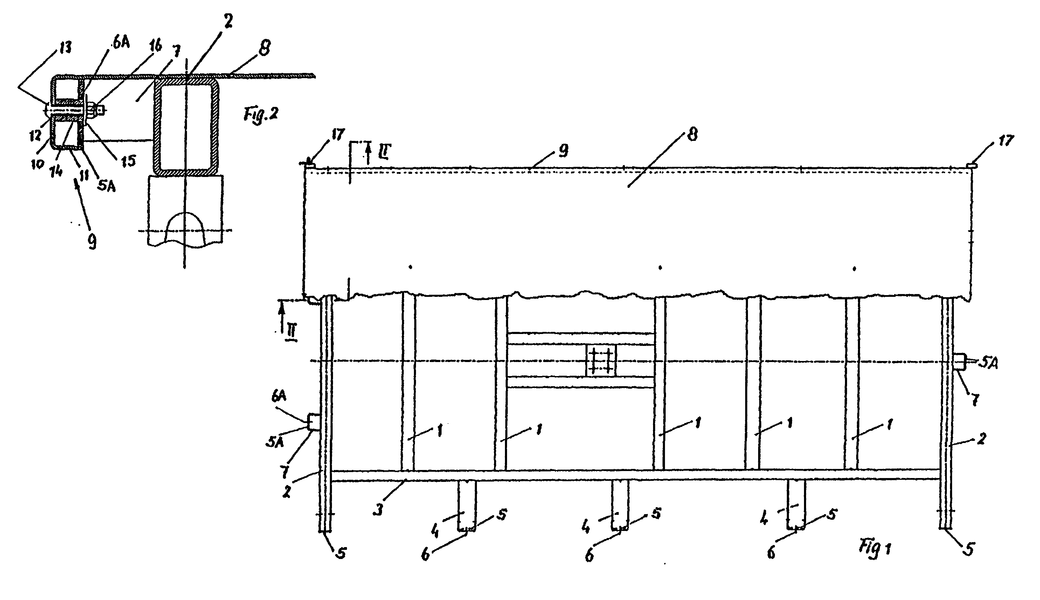

- **Fig.1**: eine Draufsicht auf den Rahmen des Transportanhängers mit teilweise abgeschnittenem Boden; und
- **Fig. 2**: einen Schnitt längs der Linie II - II.

Der Rahmen des Transportanhängers weist mehrere Querträger 1 auf, die ein nach unten offenes U-Profil besitzen. Der vorderste und der hinterste Querträger 2 bestehen aus Vierkantrohren. Die Querträger 1 verbinden zwei Längsträger 3 aus Vierkantrohren, die ihrerseits mit den Vierkantrohren 2 verbunden sind. Die Querträger 2 und die Längsträger 3 bilden die äußere Begrenzung des Rahmens.

An den Längsträgern 3 sind von den Längsträgern 3 rechtwinklig nach außen abstehende Konsolen 4 befestigt, die einen nach unten offenen U-förmigen Querschnitt aufweisen und an ihren freien Enden eine vertikal verlaufende Wand 5 besitzen. Diese vertikalen Wände 5 sind jeweils mit einer Bohrung 6 versehen. Die Enden der Querträger 2 und die Enden der Konsolen 4 verlaufen in der gleichen Flucht.

An den Querträgern 2 sind als Konsolen 4 jeweils im Querschnitt U-förmige Befestigungsbügel 7 befestigt, deren vertikale Wände 5A ebenfalls mit einer Bohrung 6A versehen sind.

Der auf den Trägern 1, 2, 3 aufliegende Boden 8 besteht aus Stahlblech. Der aus Stahlblech bestehende Boden 8 weist außen umlaufend eine L-förmige Abkantung 9 auf, die einen nach unten verlaufenden vertikalen Schenkel 10 und einen zur Bodenfläche abständig verlaufenden horizontalen Schenkel 11 bildet.

Im Bereich der Bohrung 6, 6A sind die vertikalen Schenkel 10 mit Bohrungen 12 versehen.

Vor dem Aufsetzen des Blechbodens 8 werden alle Kontaktflächen der Träger 1, 2, 3 mit dem Boden 8 mit einem Kleber versehen.

Die Verbindung zwischen dem Boden 8 und dem Rahmen erfolgt über Schraubbolzen 13. Diese sind in die Bohrungen 12 und 6 bzw. 6A eingesteckt, wobei der Kopf des Schraubbolzens 13 am Schenkel 10 der Abkantung 9 zu liegen kommt. Auf die Schraubbolzen 13 ist jeweils eine Kunststoffhülse 14 aufgesteckt, die gegen die Innenseite des Schenkels 10 anliegt und durch die Bohrung 6 bzw. 6A verläuft. Gegen die Innenseite der Wand 5 bzw. 5A liegt eine Unterlagsscheibe 15 an, gegen welche eine selbstsichernde Schraubmutter 16 anliegt. Der vertikale Schenkel 11 der Abkantung 9 stößt gegen die Wand 5 bzw. 5A an, wenn die Schraubmutter 16 angezogen ist.

An den Ecken des Bodens 8 sind an den vertikalen Schenkeln 10 Rungentaschen 17 befestigt.

## Patentansprüche

1. Transportanhänger mit einem Längs- und Querträger (1, 2, 3) aufweisenden rechteckigen Rahmen, auf dem ein Blechboden (8) angeordnet ist, der auf den Längs- und Querträgern (1, 2, 3) aufliegt und dessen längsverlaufende Ränder L-förmig abgekantet und mit dem Rahmen verbunden sind, **dadurch gekennzeichnet, daß** auch die querverlaufenden Ränder des Blechbodens (8) L-förmig abgekantet sind und einen umlaufenden Rand (9) mit vertikalen Schenkel (10) bildet, daß an den Längsträgern (3) und an den äußeren Querträgern (2) rechtwinklig nach außen von den Trägern (2, 3) abstehende Konsolen (4) angeordnet sind, die jeweils eine äußere vertikale Wand (5, 5A) aufweisen, und daß die vertikalen Schenkel (10) des L-förmigen Rands (9) des Blechbodens (8) mit den vertikalen Wänden (5, 5A) abständig verschraubt sind.

2. Transportanhänger nach Anspruch 1, **dadurch gekennzeichnet, daß** von dem Schenkel (10) ein horizontaler Schenkel (11) abständig verläuft, der gegen die vertikalen Wände (5, 5A) anstößt.

3. Transportanhänger nach Anspruch 1 oder 2, **dadurch gekennzeichnet, daß** die vertikalen Schenkel (10) und die vertikalen Wände (5, 5A) über Schraubbolzen (13) miteinander verbunden sind.

4. Transportanhänger nach Anspruch 3, **dadurch gekennzeichnet, daß** auf den Schraubbolzen (13) Kunststoffhülsen (14) angeordnet sind, welche in die Wandungsbohrungen (6, 6A) ragen und gegen die Wandungsränder der vertikalen Schenkel (10) anliegen.

5. Transportanhänger nach einem der Ansprüche 1 bis 4, **dadurch gekennzeichnet, daß** der Blechboden (8) mindestens zum Teil an den Auflegestellen mit den Trägern (1,2, 3) verklebt ist.

6. Transportanhänger nach einem der Ansprüche 1 bis 5, **dadurch gekennzeichnet, daß** die Konsolen (4) der äußeren Querträger (2) aus U-förmigen Bügeln (7) bestehen, deren Mittelschenkel die vertikalen Wände (5A) bilden.

7. Transportanhänger nach einem der Ansprüche 1 bis 6, **dadurch gekennzeichnet, daß** die Konsolen (4) der Längsträger (3) U-förmigen Querschnitt aufweisen.

8. Transportanhänger nach einem der Ansprüche 1 bis 7, **dadurch gekennzeichnet, daß** an den Ecken des Blechbodens (8) an den vertikalen Schenkeln (10) Rungentaschen (17) befestigt sind.

## Claims

1. Transport trailer with a rectangular frame which exhibits longitudinal and transverse members (1, 2, 3) and on which is arranged a sheet metal floor (8) which lies on the longitudinal and transverse members (1, 2, 3) and whose longitudinal edges are angled in an L shape and connected to the frame, **characterised in that** the transverse edges of the sheet metal floor (8) are also angled in an L shape and form a surrounding edge (9) with a vertical limb (10), **in that** arms (4) projecting outwards from the members (2, 3) at right angles are arranged on the longitudinal members (3) and on the outer transverse members (2) and in each case exhibit an outer vertical wall (5, 5a), and **in that** the vertical limbs (10) of the L-shaped edge (9) of the sheet metal floor (8) are bolted to the vertical walls (5, 5a) at intervals.

2. Transport trailer according to claim 1, **characterised in that** a horizontal limb (11), which abuts against the vertical walls (5, 5A), runs from the limb (10) at intervals.

3. Transport trailer according to claim 1 or 2, **characterised in that** the vertical limbs (10) and the vertical walls (5, 5A) are connected to one another by means of bolts (13).

4. Transport trailer according to claim 3, **characterised in that** plastic sleeves (14) are arranged on the bolts (13) and extend into the wall bores (6, 6A) and bear against the wall edges of the vertical limbs (10).

5. Transport trailer according to one of claims 1 to 4, **characterised in that** the sheet metal floor (8) is at least partly glued to the members (1, 2, 3) in the supporting locations.

6. Transport trailer according to one of claims 1 to 5, **characterised in that** the arms (4) of the outer transverse members (2) are made of U-shaped bows (7) the centre limbs of which form the vertical walls (5A).

7. Transport trailer according to one of claims 1 to 6, **characterised in that** the arms (4) of the longitudinal members (3) exhibit a U-shaped cross-section.

8. Transport trailer according to one of claims 1 to 7, **characterised in that** stanchion sockets (17) are fastened to the vertical limbs (10) in the corners of the sheet metal floor (8).

## Revendications

1. Remorque de transport comprenant un cadre rectangulaire comportant des supports longitudinaux et des supports transversaux (1, 2, 3) et sur lequel est agencé un plancher en tôle (8) posé sur les supports longitudinaux et sur les supports transversaux (1,2,3) et dont les bords longitudinaux sont pliés en L et reliés au cadre,
**caractérisée en ce que** les bords transversaux du plancher en tôle (8) sont aussi pliés en L et forment un pourtour (9) à ailes verticales (10), **en ce que** des consoles (4) en saillie perpendiculairement vers l'extérieur des supports (2, 3) et présentant chacune une paroi extérieure verticale (5, 5A), et **en ce que** les ailes verticales (10) de la bordure (9) en L du plancher en tôle (8) sont boulonnées avec un certain écartement aux parois verticales (5, 5A).

2. Remorque de transport selon la revendication 1,
**caractérisée en ce qu'une** aile horizontale (11) qui vient en appui contre les parois verticales (5, 5A), est agencée à une certaine distance de l'aile (10).

3. Remorque de transport selon la revendication 1 ou 2,
**caractérisée en ce que** les ailes verticales (10) et les parois verticales (5, 5A) sont reliées les unes aux autres par des boulons filetés (13).

4. Remorque de transport selon la revendication 3,
**caractérisée en ce que** les boulons filetés (13) sont munis de douilles en plastique (14) qui traversent les trous (6, 6A) des parois et qui viennent en appui contre les bords verticaux des ailes verticales (10).

5. Remorque de transport selon l'une des revendications 1 à 4,
**caractérisée en ce que** le plancher en tôle (8) est collé au moins en partie aux supports (1, 2, 3) sur les points de contact

6. Remorque de transport selon l'une des revendications 1 à 5,
**caractérisée en ce que** les consoles (4) des supports transversaux extérieurs (2) sont constituées d'arceaux en U (7) dont les branches médianes forment les parois verticales (5A).

7. Remorque de transport selon l'une des revendications 1 à 6,
**caractérisée en ce que** les consoles (4) des supports longitudinaux (3) présentent une section en U.

8. Remorque de transport selon l'une des revendications 1 à 7,
**caractérisée en ce que** des brides de fixation de ridelles (17) sont fixées sur les parois verticales (10) aux coins du plancher en tôle (8).
